# EUROPÄISCHE PATENTSCHRIFT

(11) **EP 3 315 901 B1**
(45) Veröffentlichungstag und Bekanntmachung des Hinweises auf die Patenterteilung: **05.06.2019**
(21) Anmeldenummer: 16195973.9
(22) Anmeldetag: 27.10.2016
(51) Int. Cl.: G01B 11/25, G01B 21/04, G06T 7/00

(54) **MESSVORRICHTUNG UND VERFAHREN ZUR TRIANGULATIONSMESSUNG**
MEASURING DEVICE AND METHOD FOR TRIANGULATION MEASUREMENT
DISPOSITIF DE MESURE ET PROCÉDÉ DE MESURE DE TRIANGULATION

(43) Veröffentlichungstag der Anmeldung: 02.05.2018
(73) Patentinhaber: Pepperl & Fuchs GmbH, 68307 Mannheim (DE)
(72) Erfinder: BLANKENBURG, Christoph, 67112 Mutterstadt (DE); HORNBERGER, Armin, 67071 Ludwigshafen (DE); WEIS, Tim, 64625 Bensheim (DE)
(74) Vertreter: Schiffer, Axel Martin

(56) Entgegenhaltungen:
- EP-A2- 2 111 947
- DE-A1-102007 038 810
- JP-B2- 4 924 042

## Beschreibung

Die vorliegende Erfindung bezieht sich in einem ersten Aspekt auf eine Messvorrichtung zur Triangulationsmessung nach dem Oberbegriff des Anspruchs 1.

In einem zweiten Gesichtspunkt betrifft die Erfindung ein Verfahren zur Triangulationsmessung nach dem Oberbegriff des Anspruchs 12.

In einer Triangulationsmessung wird Licht mit einem Lichtsender auf ein zu untersuchendes Objekt ausgesandt. Von dem beleuchteten Objektbereich wird Licht zurückgeworfen und mit einem Lichtempfänger nachgewiesen. Der Lichtempfänger kann eine räumliche Auflösung haben und ein Messbild aufnehmen. Bei dem Triangulationsprinzip sind der Lichtsender und Lichtempfänger zueinander in einer Richtung quer zur Messrichtung versetzt oder in einem Winkel zueinander angeordnet, so dass in dem Messbild die Position des beleuchteten Objektbereichs vom Abstand des Objekts zur Messvorrichtung abhängt. Daher können Positions- oder Abstandsinformationen bezüglich des Objekts gewonnen werden.

Ein etabliertes Messverfahren nutzt eine linienförmige Beleuchtung. Hierbei wird Beleuchtungslicht in einem Lichtmuster, insbesondere in Form einer Linie / eines Lichtstreifens, ausgesandt, typischerweise in Form einer geraden Linie. Abhängig von der Form des Objekts wird im Messbild aber keine gerade Linie, sondern eine verzerrte Linie oder ein Stufenverlauf aufgezeichnet. Daher kann aus dem im Messbild aufgezeichneten Verlauf eine Form- oder Positionsinformation des Objekts abgeleitet werden. Für eine höhere Zuverlässigkeit können mehrere linienförmige Beleuchtungen oder Lichtstreifen genutzt werden.

Eine gattungsgemäße Messvorrichtung zur Triangulationsmessung umfasst einen Lichtsender zum Aussenden von Beleuchtungslicht in einem Messbetrieb; eine Sendeoptik zum Leiten des Beleuchtungslichts in einen Lichtmuster, insbesondere in mehreren Lichtstreifen, in Richtung eines Objekts; einen Lichtempfänger zum Aufnehmen eines Bilds, wobei in dem Messbetrieb das Bild ein Messbild des Objekts ist, welches durch Messung von Licht, das von beleuchteten Objektbereichen zurückgeworfen wird, aufgenommen wird; und eine Steuer- und Auswerteeinrichtung, welche dazu eingerichtet ist, in einem Messbetrieb eine Form- oder Positionsinformation des Objekts auf Grundlage des Messbilds zu bestimmen.

In entsprechender Weise ist bei einem gattungsgemäßen Verfahren zur Triangulationsmessung vorgesehen, dass:
- mit einem Lichtsender Beleuchtungslicht ausgesendet wird,
- mit einer Sendeoptik das Beleuchtungslicht in einem Lichtmuster, insbesondere in mehreren Lichtstreifen, in Richtung eines Objekts geleitet wird,
- mit einem Lichtempfänger Licht, das von beleuchteten Objektbereichen zurückgeworfen wird, gemessen wird und ein Messbild des Objekts aufgenommen wird, und
- mit einer Steuer- und Auswerteeinrichtung eine Form- oder Positionsinformation des Objekts auf Grundlage des Messbilds bestimmt wird.

Eine solche Messvorrichtung und ein solches Messverfahren werden beispielsweise von der Anmelderin beschrieben in EP 2 287 560 B1 und sind auch bekannt aus EP 2 111 947 A2, US 6,542,249 B1 und US 2004/0032974 A1.

Für den Messbetrieb werden verschiedene Parameterdaten verwendet. Diese können beispielsweise die Belichtungszeit sein oder Sollwerte für die zu messenden Objekte, etwa ein gewünschtes Objekt-Höhenprofil. Für den Messbetrieb ideale Parameterdaten hängen daher insbesondere von einem Einsatzgebiet und den momentan zu untersuchenden Objekten ab. Daher kann es sinnvoll sein, über eine Kommunikationsschnittstelle Parameterdaten an die Messvorrichtung zu übertragen.

Als Kommunikationsschnittstelle wird häufig eine BUS-Schnittstelle verwendet, beispielsweise CAN, Profibus, Ethernet oder eine serielle Schnittstelle. Der Aufwand zum Übertragen neuer Parameterdaten ist hierbei aber ungewünscht hoch, da entsprechende Recheneinheiten Computer mit zugehörigen Programmen und verhältnismäßig gut geschultes Personal zum Bedienen der Programme erforderlich sind. Unter dem Begriff eine Recheneinheit werden hier Computer, aber auch Speicherprogrammierbare Steuerungen (SPS) und Prozess-Leit-Systeme, und andere rechnerbasierte Steuer- und Regelungseinheiten verstanden.

Weiterhin kann als Kommunikationsschnittstelle auch ein Funkmodul verwendet werden, welches beispielsweise von einem Smartphone oder einem Computer die Parameterdaten empfängt. Hierbei drohen aber zahlreiche Gefahren und Probleme: So könnten Viren oder andere Schadprogramme auf dem Smartphone oder Computer ungewünschte Parameterdaten auf die Messvorrichtung übertragen. Auch könnten Dritte über andere Funkmittel auf die Messvorrichtung zugreifen. In Umgebungen mit elektromagnetischen Störquellen oder abschirmenden Umgebungen sind Funkmodule häufig nicht zuverlässig. Auch können Funkmodule grundsätzlich verboten sein, um Störungen eines Firmennetzwerks auszuschließen.

Alternativ können Parameterdaten über ein Bedienelement an der Messvorrichtung eingegeben werden, beispielsweise über einen Knopf, einen berührungsempfindlichen Bildschirm oder eine Drehschraube. Wegen der geringen Größe der Messvorrichtung ist ein berührungsempfindlicher Bildschirm meist jedoch sehr klein und die Menüführung ist häufig auch umständlich. Knöpfe am Messgerät sind ebenfalls meist sehr klein und sind je nach Einsatzgebiet oftmals nur schwer erreichbar. In der Regel kann über Bedienelemente nur von geschultem Personal eine Dateneingabe erfolgen.

Als eine **Aufgabe** der Erfindung kann angesehen werden, eine Messvorrichtung und ein Verfahren zur Triangulationsmessung mit einer Messvorrichtung anzugeben, wobei Parameterdaten einfach und zuverlässig an die Messvorrichtung übertragen werden können.

Diese Aufgabe wird durch die Messvorrichtung mit den Merkmalen des Anspruchs 1 und durch das Verfahren mit den Merkmalen des Anspruchs 12 gelöst.

Vorteilhafte Varianten der erfindungsgemäßen Messvorrichtung und des erfindungsgemäßen Verfahrens sind Gegenstand der abhängigen Ansprüche und werden außerdem in der folgenden Beschreibung erläutert.

Bei der Messvorrichtung der oben genannten Art ist erfindungsgemäß die Steuer- und Auswerteeinrichtung dazu eingerichtet, zwischen dem Messbetrieb und einem Datenlesebetrieb zu wechseln, wobei die Steuer- und Auswerteeinrichtung dazu eingerichtet ist, in dem Datenlesebetrieb das Bild hinsichtlich kodierter Parameterdaten auszuwerten und die in dieser Weise gelesenen Parameterdaten in einem darauffolgenden Messbetrieb zu verwenden.

In analoger Weise wird bei dem Verfahren der oben genannten Art erfindungsgemäß ein Datenlesebetrieb durchgeführt, in dem der Lichtempfänger Licht von einem mit einem Code versehenen Objekt misst und ein Bild, nachstehend Codebild genannt, aufnimmt und die Steuer- und Auswerteeinrichtung das Codebild hinsichtlich kodierter Parameterdaten auswertet. In einem auf den Datenlesebetrieb folgenden Messbetrieb werden die im Datenlesebetrieb gelesenen Parameterdaten verwendet. Bei dem oben genannten Messbetrieb des erfindungsgemäßen Verfahrens kann es sich um diesen auf den Datenlesebetrieb folgenden Messbetrieb handeln.

Unter dem Begriff eines Lichtmusters soll im Rahmen der vorliegenden Beschreibung eine grundsätzlich beliebige Strukturierung des Sendelichts verstanden werden. Diese Strukturierung kann darin bestehen, dass das Licht in einfachen geometrischen Strukturen, wie Streifen, d.h. Lichtbändern, oder Punkten auf die zu vermessenden Objekte gestrahlt wird. Prinzipiell soll unter dem Begriff eines Lichtmusters aber auch eine zeitliche Strukturierung verstanden werden. Beispielsweise können auf ein und dasselbe Objekt von unterschiedlichen Lichtsendern Licht eingestrahlt werden. Wenn verschiedene Lichtsender oder Lichtquellen verwendet werden, die sich an unterschiedlichen Positionen im Raum befinden, kann das Licht auch, räumlich gesehen, vergleichsweise unstrukturiert sein. Insbesondere kann dann auch unstrukturiertes, also flächiges oder kontinuierliches Licht verwendet werden. Beispielsweise kann kontinuierliches Licht abwechselnd aus unterschiedlichen Raumrichtungen auf ein Objekt gestrahlt werden.

Gemäß einem wesentlichen Gedanken der Erfindung erfolgt eine Aufnahme von Parameterdaten optisch, nämlich indem der Lichtempfänger ein Bild aufnimmt, das sodann ausgewertet wird. Der Lichtempfänger hat hierzu eine räumliche Auflösung und kann beispielsweise eine Kamera umfassen. Die zu lesenden Daten sind auf einem Objekt aufgebracht, beispielsweise als Barcode. Durch dieses optische Lesen ist keine Eingabe über Bedienelemente an der Messvorrichtung nötig. Auch wird kein Funkmodul gebraucht und hinsichtlich der elektromagnetischen Verträglichkeit (EMV) bestehen keinerlei Risiken. Zudem können Manipulationsversuche durch Schadsoftware weitestgehend ausgeschlossen werden, indem informationstragende Objekte, welche die Parameterdaten enthalten, nur über den beschriebenen optischen Weg ausgelesen werden können.

Die Messvorrichtung kann in zwei verschiedenen Betriebsmodi arbeiten: In dem Datenlesebetrieb wird ein aufgenommenes Bild dahin ausgewertet, ob ein Code im Bild erkennbar ist. Aus diesem Code werden sodann die Parameterdaten gelesen. Das im Datenlesebetrieb aufgenommene Bild wird auch als Codebild bezeichnet. Das im Datenlesebetrieb abgebildete Objekt trägt den Code und kann daher auch als informationstragendes Objekt bezeichnet werden.

Im Messbetrieb wird ein aufgenommenes Bild eines zu untersuchenden Objekts aufgenommen und dahingehend ausgewertet, welche Lage und Form beispielsweise Lichtstreifen haben, die auf das zu untersuchende Objekt gestrahlt werden. Das im Messbetrieb verwendete zu untersuchende Objekt ist in den meisten Anwendungen verschieden von dem informationstragenden Objekt, das im Datenlesebetrieb genutzt wird.

Zur Beleuchtung kann prinzipiell derselbe Lichtsender im Messbetrieb und im Datenlesebetrieb eingesetzt werden. Insbesondere kann vorgesehen sein, in diesen beiden Betrieben allein den Lichtsender zur Beleuchtung einzusetzen. Da der Lichtsender beispielsweise ein Streifenmuster erzeugt, ist es in diesen Fällen sinnvoll, wenn das informationstragende Objekt einen Code umfasst, der durch einen einzigen Lichtstreifen beleuchtet werden kann. Solch ein Code kann etwa ein eindimensionaler Barcode sein.

Es kann aber auch eine Zusatzbeleuchtungseinrichtung vorhanden sein. Die Steuer- und Auswerteeinrichtung kann dazu eingerichtet sein, die Zusatzbeleuchtungseinrichtung in dem Datenlesebetrieb einzuschalten. Die Zusatzbeleuchtungseinrichtung kann dazu eingerichtet sein, einen größeren Bereich zu beleuchten als der Lichtsender. Dies kann beispielsweise durch verschiedene Optiken erreicht werden, wobei eine Lichtquelle vom Lichtsender und von der Zusatzbeleuchtungseinrichtung nicht zwingend verschieden sein müssen. Beide können zum Beispiel durch jeweils einen Laser oder auch durch denselben Laser gebildet sein. Die Zusatzbeleuchtungseinrichtung kann eine, beispielsweise flächige, Beleuchtung bereitstellen, das heißt ohne Lücken; der Lichtsender hingegen erzeugt zusammen mit der Sendeoptik nicht eine flächige Beleuchtung, sondern beispielsweise einen oder mehrere Lichtstreifen, zwischen denen unbeleuchtete Bereiche sind. Die Zusatzbeleuchtungseinrichtung kann insbesondere sinnvoll sein, wenn der Code auf dem informationstragenden Objekt ein zweidimensionaler Code ist, welcher durch einen Lichtstreifen oder eine Lichtquelle nicht vollständig beleuchtet würde.

Es kann bevorzugt sein, dass die Zusatzbeleuchtungseinrichtung im gleichen oder in einem überlappenden Wellenlängenbereich Licht aussendet wie der Lichtsender. Dies ist hinsichtlich der Gestaltung des Lichtempfängers und/oder anderer Komponenten der Messvorrichtung vorteilhaft.

Die Steuer- und Auswerteeinrichtung kann dazu eingerichtet sein, die Zusatzbeleuchtungseinrichtung im Messbetrieb auszuschalten. Auch kann vorgesehen sein, dass der Lichtsender allein im Messbetrieb und nicht im Datenlesebetrieb eingeschaltet wird.

Bei wiederum weiteren Ausführungsformen wird im Datenlesebetrieb Fremdlicht oder Umgebungslicht genutzt. Demgemäß wird hier der Lichtsender ausgeschaltet und eine Zusatzbeleuchtungseinrichtung ist nicht vorhanden oder jedenfalls nicht im Datenlesebetrieb eingeschaltet. Bei hellen Umgebungen ist diese Ausführung vorteilhaft und es kann nicht dadurch zu Schwierigkeiten kommen, dass beispielsweise die vom Lichtsender ausgesandten Lichtstreifen nur einen kleinen Teil eines informationstragenden Objekts beleuchten können.

Insbesondere wenn allein Umgebungslicht im Datenlesebetrieb genutzt wird, ist eine Belichtungszeit des Lichtempfängers relevant. In einem Datenlesebetrieb kann eine längere Belichtungszeit des Lichtempfängers eingestellt sein als im Messbetrieb. Aber auch bei Nutzung des Lichtsenders oder der Zusatzbeleuchtungseinrichtung kann eine höhere Belichtungszeit im Datenlesebetrieb sinnvoll sein. Hierdurch können dunkle und helle Bereiche eines Codes auf dem Objekt besonders zuverlässig aufgenommen werden. Hingegen sind im Messbetrieb raschere Objektbewegungen häufig, so dass hier eine kürzere Belichtungszeit angebracht ist.

Die Parameterdaten können prinzipiell beliebige Daten sein, die in einem auf den Datenlesebetrieb folgenden Messbetrieb verwendet werden. Hierbei kann es sich um Daten zur Steuerung des Lichtsenders, des Lichtempfängers oder zur Auswertung eines aufgenommenen Bilds handeln. Beispielsweise können die Parameterdaten einen Belichtungsdauerwert umfassen. Die Steuer- und Auswerteeinrichtung kann dann dazu eingerichtet sein, in dem auf den Datenlesebetrieb folgenden Messbetrieb den Belichtungsdauerwert zur Steuerung des Lichtsenders und/oder des Lichtempfängers zu verwenden. Beim Lichtsender kann der Belichtungsdauerwert als eine Lichtpulsdauer verstanden werden; beim Lichtempfänger kann eine Belichtungsdauer die Zeitspanne bis zum Auslesen lichtempfindlicher Elemente des Lichtempfängers angeben.

Die Parameterdaten können auch Objekt-Sollinformationen umfassen, beispielsweise ein ideales Höhenprofil eines Objekts, oder andere Informationen über die idealen Abmessungen eines Objekts. Parameterdaten können auch Grenzwerte für ein Höhenprofil oder für andere Abmessungen sein, wobei abhängig von einem Einhalten der Grenzwerte entschieden wird, ob ein zu messendes Objekt vorgegebene Kriterien erfüllt oder nicht. So kann die Steuer- und Auswerteeinrichtung dazu eingerichtet sein, in einem auf den Datenlesebetrieb folgenden Messbetrieb auf Grundlage des Messbilds ermittelte Form- oder Positionsinformationen des Objekts mit den Objekt-Sollinformationen zu verrechnen und ein Ergebnis hiervon über einen elektrischen Anschluss der Messvorrichtung auszugeben.

Der Datenlesebetrieb kann in prinzipiell verschiedener Weise gestartet werden. So kann die Steuer- und Auswerteeinrichtung dazu eingerichtet sein, den Datenlesebetrieb bei einem, insbesondere jedem, Einschalten der Messvorrichtung durchzuführen. Anschließend wird in den Messbetrieb gewechselt. Das Ende des Datenlesebetriebs kann dadurch erreicht sein, dass kodierte Parameterdaten in einem aufgenommenen Bild erkannt und ausgewertet wurden.

Alternativ oder zusätzlich kann ein Datenlesebetrieb auch nach einer vorbestimmten Zeitspanne gestartet werden und/oder durch eine Betätigung eines Bedienelements an der Messvorrichtung. Die Nutzung eines Bedienelements hat nach wie vor wesentliche Vorteile gegenüber herkömmlichen Messvorrichtungen, bei denen die gesamten Parameterdaten über Bedienelemente an der Messvorrichtung eingegeben werden. So ist die Bedienung leichter und weniger fehleranfällig, wenn wenig geschultes Personal bloß ein Bedienelement zum Starten des Datenlesebetriebs betätigen muss.

Die nachfolgende Ausführungsform kann besonders nützlich sein, wenn im Datenlesebetrieb eine Beleuchtung wie im Messbetrieb über den Lichtsender erfolgt, oder wenn in beiden Fällen die Zusatzbeleuchtungseinrichtung genutzt wird. So kann die Steuer- und Auswerteeinrichtung dazu eingerichtet sein:
- das vom Lichtempfänger aufgenommene Bild danach auszuwerten, ob ein Code und damit kodierte Parameterdaten in dem Bild enthalten sind,
- den Datenlesebetrieb auszuführen, wenn ein Code enthalten ist, und
- den Messbetrieb auszuführen, wenn kein Code enthalten ist.

Bei dem Code kann es sich beispielsweise um einen multidimensionalen, insbesondere zweidimensionalen, Code handeln, welcher einen Erkennungsbereich umfasst, durch den erkannt wird, dass ein Code vorliegt, und welcher einen Datenbereich umfasst, in dem die Parameterdaten kodiert sind.

Bei der obigen Ausführung wird somit erst durch die Auswertung des aufgenommenen Bilds entschieden, ob ein Datenlesebetrieb oder ein Messbetrieb erfolgen soll. Der Lichtsender und der Lichtempfänger werden hierbei in beiden Fällen in gleicher Weise betrieben.

Die Erfindung umfasst auch eine Kombination aus einer Messvorrichtung, die wie hier beschrieben gestaltet ist, und einem Objekt, welches die kodierten Parameterdaten enthält/trägt. Dieses informationstragende Objekt kann einen Code oder Codebereich aufweisen, in dem Parameterdaten durch helle und dunkle Bereiche kodiert sind, insbesondere durch einen eindimensionalen Barcode oder einen zweidimensionalen Code.

Alternativ oder zusätzlich kann aber auch das Triangulationsprinzip zum Erkennen eines Codes genutzt werden. Der Lichtsender und auch die gegebenenfalls vorhandene Zusatzbeleuchtungseinrichtung sind gemäß dem Triangulationsprinzip relativ zum Lichtempfänger angeordnet, wodurch ein Höhenprofil des informationstragenden Objekts messbar ist. Die Parameterdaten können nun in dem Höhenprofil des Objekts kodiert sein, das heißt verschiedene Parameterdaten entsprechen verschiedenen Verläufen eines Höhenprofils. Damit ist keine Kodierung durch unterschiedlich helle Bereiche (wie bei einem Barcode) erforderlich. Je nach Einsatzgebiet kann die Kodierung über ein Höhenprofil zuverlässiger sein. Das Höhenprofil kann beispielweise durch eine gestanzte Form im Objekt gebildet werden.

Die oben genannte Sendeoptik zum Erzeugen beispielsweise der Lichtstreifen kann prinzipiell beliebig gestaltet sein. Beispielsweise kann die Sendeoptik ein strukturiertes Element umfassen, welches auftreffendem Beleuchtungslicht eine räumliche Struktur, insbesondere wie oben beschrieben, aufprägt. Das strukturierte Element kann ein diffraktives, also beugendes, optisches Element sein, welches eine Struktur zum Erzeugen eines Lichtmusters, beispielsweise der unterschiedlichen Lichtstreifen, hat. Ein diffraktives optisches Element kann einen transparenten Träger, etwa einen Glasträger, umfassen, auf dem eine Mikrostruktur aufgebracht ist, beispielsweise Rillen oder andere Vertiefungen. Auftreffendes Licht wird an der Mikrostruktur gebeugt, wobei Teilstrahlen des auftreffenden Licht miteinander interferieren. Hierdurch können zum Beispiel die Lichtstreifen gebildet werden.

Bei alternativen Ausführungen kann die Sendeoptik auch ein Multi-Spiegel-Array aufweisen, dessen Spiegel so ausgerichtet sind, dass auftreffendes Beleuchtungslicht als Lichtmuster, zum Beispiel als unterschiedliche Lichtstreifen, weitergeleitet wird. Bei einer weiteren Ausführungsalternative weist die Sendeoptik ein Mikrolinsen-Array auf, dessen Linsen so angeordnet und gebildet sind, dass auftreffendes Beleuchtungslicht als Lichtmuster, beispielsweise in unterschiedlichen Lichtstreifen, transmittiert wird. Hierzu können die Linsen unterschiedlich gebildet sein, insbesondere teilweise verdunkelt sein, um unterschiedliche Transmissionsgrade zu bewirken.

Verfahrensvarianten ergeben sich auch aus dem bestimmungsgemäßen Gebrauch der beschriebenen Ausführungsformen erfindungsgemäßer Messvorrichtungen. Ebenso sind Verfahrensvarianten auch als Varianten der Messvorrichtung aufzufassen.

Weitere Vorteile und Merkmale der Erfindung werden nachstehend mit Bezug auf die beigefügten schematischen Figuren beschrieben. Hierin zeigen:
- Fig. 1: eine schematische Darstellung einer Ausführungsform einer erfindungsgemäßen Messvorrichtung;
- Fig. 2: ein Bild, das mit einer Ausführungsform einer erfindungsgemäßen Messvorrichtung aufgenommen ist;

- Fig. 3: ein weiteres Bild, das mit einer Ausführungsform einer erfindungsgemäßen Messvorrichtung aufgenommen ist.

Gleiche und gleich wirkende Bestandteile sind in den Figuren in der Regel mit denselben Bezugszeichen gekennzeichnet.

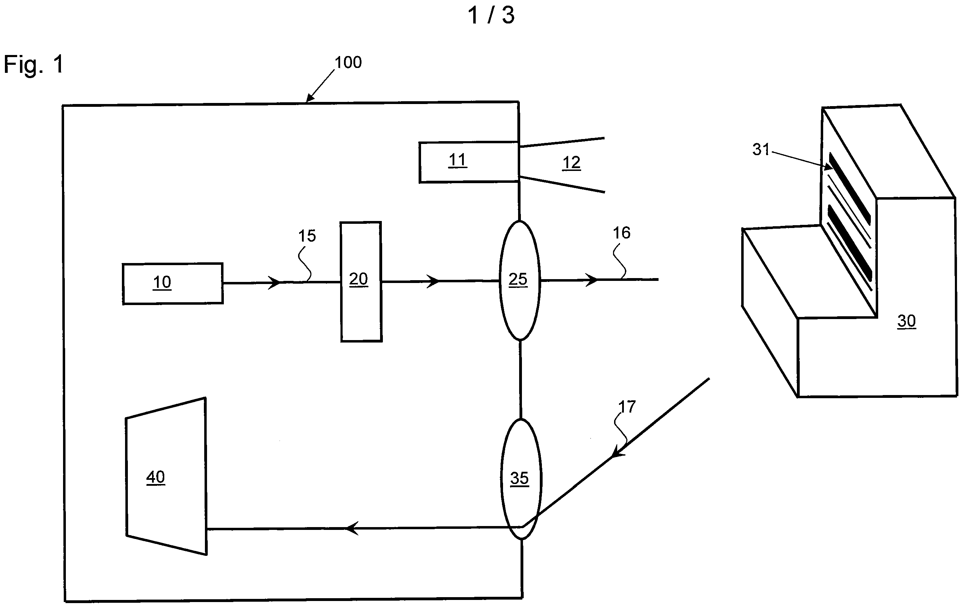

Fig. 1 zeigt ein Ausführungsbeispiel einer erfindungsgemäßen Messvorrichtung 100. Diese umfasst einen Lichtsender 10 und einen Lichtempfänger 40, welche für eine Triangulationsmessung angeordnet und gestaltet sind. Der Lichtsender sendet Beleuchtungslicht 15 aus. Mit einer Sendeoptik 20, 25 wird das Beleuchtungslicht 15 im gezeigten Beispiel in Form von einem oder mehreren Streifen, welche auch als Lichtstreifen 16 bezeichnet werden, weiter in Richtung eines Objekts 30 geleitet. Hierbei hat das Beleuchtungslicht im Querschnitt, das heißt in einem Schnitt quer oder senkrecht zur Ausbreitungsrichtung, einen Streifen oder bevorzugt mehrere voneinander beabstandete Streifen. Die Streifen können parallel zueinander sein. Es wird betont, dass das Lichtmuster prinzipiell auch anders ausgestaltet sein kann. Beispielsweise können eine Mehrzahl von Punkten oder in beliebiger anderer Weise geformte Lichtobjekte vorhanden sein. Prinzipiell ist es auch möglich, dass das Licht Muster eine zeitliche Strukturierung aufweist in dem Sinn, dass zu unterschiedlichen Zeiten unterschiedliche Lichtmuster, die dann auch vergleichsweise unstrukturiert sein können, auf ein Objekt gestrahlt werden.

Treffen die Lichtstreifen auf das Objekt 30, wird von den beleuchteten Objektbereichen Licht 17 zurückgeworfen. Das zurückgeworfene Licht 17 wird mit dem Lichtempfänger 40 nachgewiesen. Der Lichtempfänger 40 kann eine Kamera sein, die ein zwei-dimensionales Bild aufnimmt. Das zurückgeworfene Licht 17 führt in dem Bild zu Streifen, welche den Lichtstreifen entsprechen.

Bei dem Objekt 30 kann es sich um ein zu untersuchendes Objekt 30 handeln, dessen Position und/oder Form gemessen werden sollen. Um ein solches Objekt 30 zu überprüfen, wird ein Messbetrieb ausgeführt. In diesem werden der Lichtsender 10 und der Lichtempfänger 40 so betrieben, wie oben beschrieben. Das hierbei aufgezeichnete Bild wird auch als Messbild bezeichnet. Steuer- und Auswerteeinrichtung der Messvorrichtung 100 werten nun das Messbild aus. Hierzu werden Form und Verlauf von im Bild aufgezeichneten Streifen ausgewertet. Die Streifen gehen auf die Lichtstreifen, die auf das Objekt 30 treffen, zurück. Form und Abstand des Objekts 30 beeinflussen die Form und den Verlauf der Streifen im Bild. Daher kann die Steuer- und Auswerteeinrichtung hieraus auf die Form und/oder den Abstand des Objekts 30 schließen.

Für den Messbetrieb sind verschiedene Parameterdaten erforderlich. Diese können beispielsweise umfassen: eine Pulsdauer, für die der Lichtsender 10 Beleuchtungslicht 15 aussendet; eine Belichtungsdauer, über welche der Lichtempfänger 40 auftreffendes Licht 17 integriert; Daten / Vergleichsdaten über zu untersuchende Objekte, womit die Steuer- und Auswerteeinrichtung entscheiden kann, ob ein momentan untersuchtes Objekt hinsichtlich Form oder Abstand vorbestimmte Kriterien erfüllt.

Solche Parameterdaten werden gemäß der Erfindung nicht, oder jedenfalls nicht ausschließlich, über ein Kabel oder elektromagnetischen Funk übertragen. Vielmehr wird ein optisches Lesen genutzt, welche eine einfache Bedienung ermöglicht und besonders sicher gegenüber unerwünschten Manipulationen ist.

Hierzu werden informationstragende Objekte 30 verwendet, auf welchen ein Code 31 aufgebracht ist. Der Code 31 kann zum Beispiel einen eindimensionalen oder zweidimensionalen Bereich mit hellen und dunklen Abschnitten umfassen. In diesem Code 31 sind die Parameterdaten enthalten.

Der Lichtsender 10 kann nun das informationstragende Objekt 30 beleuchten und der Lichtempfänger 40 nimmt ein Bild hiervon auf, wie auch oben beschrieben. Das vom informationstragenden Objekt 30 aufgenommene Bild wird auch als Codebild bezeichnet. Die Steuer- und Auswerteeinrichtung analysiert das Codebild und ermittelt die darin enthaltenen Parameterdaten. Dieser Betrieb wird als Datenlesebetrieb bezeichnet. Wurden Parameterdaten gelesen, so wird der Datenlesebetrieb beendet und zum Messbetrieb gewechselt. In diesem werden die gelesenen Parameterdaten zur Messung oder Analyse eines zu untersuchenden Objekts verwendet.

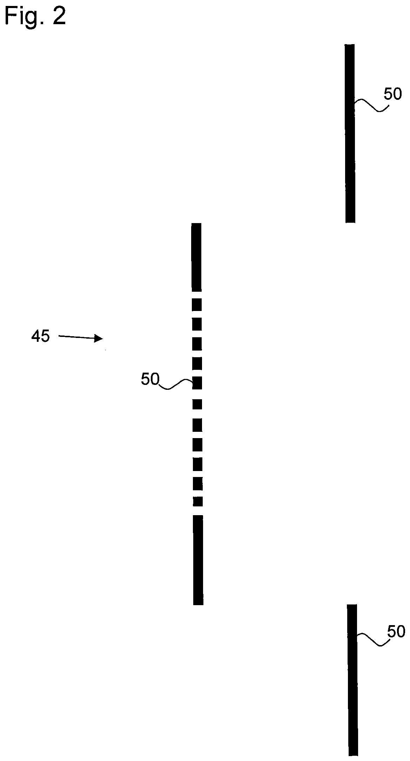

Ein Beispiel eines im Datenlesebetrieb aufgenommenen Codebilds 45 ist in Figur 2 schematisch gezeigt. In diesem Fall wurde ein Lichtstreifen auf das Objekt 30 mit dem Code 31 aus Figur 1 gestrahlt. Dieser Lichtstreifen führt im Codebild 45 zu einem Streifen 50. Der Streifen 50 weist zwei Sprünge auf, welche durch eine Stufenform des Objekts 30 bedingt sind. Zudem weist der Streifen 50 einen Bereich aus abwechselnd hellen und dunklen Bereichen auf. Diese entsprechen dem Code 31, welcher hier als Barcode gebildet ist. Die abwechselnd hellen und dunklen Bereiche kodieren die Parameterdaten.

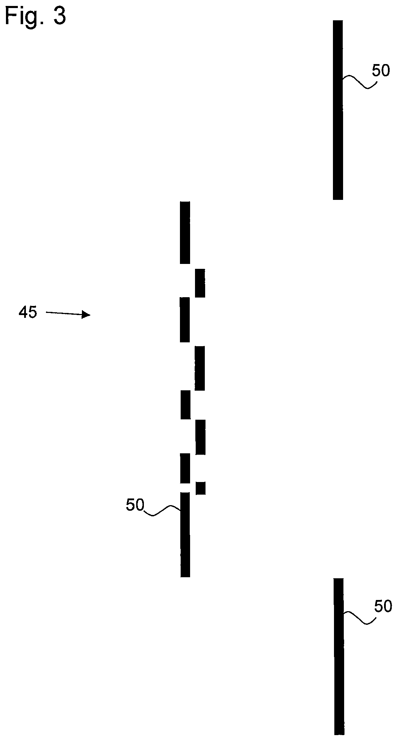

Ein informationstragendes Objekt kann alternativ zu einem Codebereich aus abwechselnd hellen und dunklen Bereichen auch ein Höhenprofil aufweisen, welches die Parameterdaten kodiert. In diesem Fall ist eine Form des Objekts abhängig von den Parameterdaten hergestellt. Diese Form beziehungsweise das Höhenprofil wird nun durch die Triangulationsmessung mit dem Lichtsender 10 und dem Lichtempfänger 40 gemessen. Hiermit wird ein Codebild 45 aufgenommen, wie es beispielhaft in Fig. 3 gezeigt ist. In diesem Fall wurde das informationstragende Objekt mit einem Lichtstreifen bestrahlt, wodurch ein Streifen 50 im aufgenommenen Bild 45 erkennbar ist. Der Streifen 50 weist in dem dargestellten Beispiel wiederum zwei größere Sprünge auf, welche durch den Anfang und das Ende des Objekts bedingt sein können. In einem mittleren Bereich des Streifens 50 variiert der Streifen zwischen zwei verschiedenen Höhen. Diese beiden Höhen entsprechen zwei verschiedenen Höhen eines Höhenprofils des Objekts. Durch diese Höhenvariation werden Daten, nämlich die Parameterdaten, kodiert und gelesen.

Anstelle eines Höhenprofils oder eines eindimensionalen Barcodes können die Parameterdaten auch in einem zweidimensionalen Code aus hellen und dunklen Bereichen kodiert sein. Insbesondere in solch einem Fall kann es sinnvoll sein, nicht bloß einen Lichtstreifen auf das informationstragende Objekt zu senden. Vielmehr kann hier eine flächige Beleuchtung gewünscht sein, durch welche sichergestellt wird, dass der gesamte zweidimensionale Codebereich beleuchtet wird. Hierzu kann eine Zusatzbeleuchtungseinrichtung 11 vorhanden sein, siehe Figur 1. Diese sendet zusätzliches Beleuchtungslicht 12 in Richtung des Objekts 30.

Es kann vorgesehen sein, dass die Zusatzbeleuchtungseinrichtung 11 allein im Datenlesebetrieb eingeschaltet wird. Der Lichtsender 10 kann im Datenlesebetrieb eingeschaltet sein, wie oben beschrieben. Alternativ kann der Lichtsender 10 aber auch im Datenlesebetrieb ausgeschaltet sein, womit die Zusatzbeleuchtungseinrichtung 11 alleinig Beleuchtungslicht aussendet. Im Übrigen können für diese Ausführungsform die obigen Erläuterungen gelten, mit dem einzigen Unterschied, dass das Beleuchtungslicht nicht oder nicht nur vom Lichtsender 10, sondern von der Zusatzbeleuchtungseinrichtung 11 entsendet wird.

Durch die erfindungsgemäße Messvorrichtung können Parameterdaten einfach und sicher übertragen werden. Hierzu wird lediglich ein informationstragendes Objekt in den Messbereich der Messvorrichtung angeordnet. Dadurch ist vor Ort kein aufwändig geschultes Personal erforderlich. Zudem ist die Sicherheit höher als bei einer Funkübertragung, welche verhältnismäßig fehleranfällig und manipulierbar ist. Auch hinsichtlich Kosten bietet die erfindungsgemäße Messvorrichtung Vorteile, da beispielsweise kein teures Funkmodul erforderlich ist.

## Patentansprüche

1. Messvorrichtung zur Triangulationsmessung mit
- einem Lichtsender (10) zum Aussenden von Beleuchtungslicht (15) in einem Messbetrieb,
- einer Sendeoptik (20, 25) zum Leiten des Beleuchtungslichts (15) in einem Lichtmuster, insbesondere in mehreren Lichtstreifen, in Richtung eines Objekts (30),
- einem Lichtempfänger (40) zum Aufnehmen eines Bilds (45), wobei in dem Messbetrieb das Bild ein Messbild (45) des Objekts (30) ist, welches durch Messung von Licht (17), das von beleuchteten Objektbereichen zurückgeworfen wird, aufgenommen wird,
- einer Steuer- und Auswerteeinrichtung, welche dazu eingerichtet ist, in einem Messbetrieb eine Form- oder Positionsinformation des Objekts (30) auf Grundlage des Messbilds (45) zu bestimmen,
**dadurch gekennzeichnet,**
**dass** die Steuer- und Auswerteeinrichtung dazu eingerichtet ist, zwischen dem Messbetrieb und einem Datenlesebetrieb zu wechseln, wobei die Steuer- und Auswerteeinrichtung dazu eingerichtet ist, in dem Datenlesebetrieb das Bild (45) hinsichtlich kodierter Parameterdaten auszuwerten und die in dieser Weise gelesenen Parameterdaten in einem darauffolgenden Messbetrieb zu verwenden.

2. Messvorrichtung nach Anspruch 1,
**dadurch gekennzeichnet,**
**dass** eine Zusatzbeleuchtungseinrichtung (11) vorhanden ist und
**dass** die Steuer- und Auswerteeinrichtung dazu eingerichtet ist, die Zusatzbeleuchtungseinrichtung (11) in dem Datenlesebetrieb einzuschalten.

3. Messvorrichtung nach Anspruch 2,
**dadurch gekennzeichnet,**
**dass** die Zusatzbeleuchtungseinrichtung (11) so gestaltet ist, dass sie einen größeren Bereich beleuchtet als der Lichtsender (10).

4. Messvorrichtung nach Anspruch 2 oder 3,
**dadurch gekennzeichnet,**
**dass** die Steuer- und Auswerteeinrichtung dazu eingerichtet ist, die Zusatzbeleuchtungseinrichtung (11) im Messbetrieb auszuschalten.

5. Messvorrichtung nach einem der Ansprüche 1 bis 4,
**dadurch gekennzeichnet,**
**dass** die Parameterdaten einen Belichtungsdauerwert umfassen und dass die Steuer- und Auswerteeinrichtung dazu eingerichtet ist, in dem auf den Datenlesebetrieb folgenden Messbetrieb den Belichtungsdauerwert zur Steuerung des Lichtsenders (10) und/oder des Lichtempfängers (40) zu verwenden.

6. Messvorrichtung nach einem der Ansprüche 1 bis 5,
**dadurch gekennzeichnet,**
**dass** die Parameterdaten Objekt-Sollinformationen umfassen und
**dass** die Steuer- und Auswerteeinrichtung dazu eingerichtet ist, auf Grundlage des Messbilds (45) ermittelte Form- oder Positionsinformation des Objekts (30) mit den Objekt-Sollinformationen zu verrechnen und ein Ergebnis hiervon über einen elektrischen Anschluss der Messvorrichtung auszugeben.

7. Messvorrichtung nach einem der Ansprüche 1 bis 6,
**dadurch gekennzeichnet,**
**dass** die Steuer- und Auswerteeinrichtung dazu eingerichtet ist, den Datenlesebetrieb bei einem Einschalten der Messvorrichtung durchzuführen und anschließend in den Messbetrieb zu wechseln.

8. Messvorrichtung nach einem der Ansprüche 1 bis 7,
**dadurch gekennzeichnet,**
**dass** die Steuer- und Auswerteeinrichtung dazu eingerichtet ist:
- das vom Lichtempfänger (40) aufgenommene Bild (45) danach auszuwerten, ob ein Code (31) und damit kodierte Parameterdaten in dem Bild (45) enthalten sind,
- den Datenlesebetrieb auszuführen, wenn ein Code (31) enthalten ist, und
- den Messbetrieb auszuführen, wenn kein Code (31) enthalten ist.

9. Kombination aus einer Messvorrichtung nach einem der Ansprüche 1 bis 8 und einem Objekt (30), welches die kodierten Parameterdaten enthält.

10. Kombination aus der Messvorrichtung und dem Objekt nach Anspruch 9,
**dadurch gekennzeichnet,**
**dass** das Objekt (30) einen Codebereich aufweist, in dem Parameterdaten durch helle und dunkle Bereiche kodiert sind, insbesondere durch einen eindimensionalen Barcode oder einen zweidimensionalen Code (31).

11. Kombination aus der Messvorrichtung und dem Objekt nach Anspruch 9,
**dadurch gekennzeichnet,**
**dass** das Objekt (30) ein Höhenprofil aufweist und Parameterdaten durch einen Verlauf des Höhenprofils kodiert sind.

12. Verfahren zur Triangulationsmessung,
bei dem in einem Messbetrieb
- mit einem Lichtsender (10) Beleuchtungslicht (15) ausgesendet wird,
- mit einer Sendeoptik (20, 25) das Beleuchtungslicht (15) in einem Lichtmuster, insbesondere in mehreren Lichtstreifen, in Richtung eines Objekts (30) geleitet wird,
- mit einem Lichtempfänger (40) Licht (17), das von beleuchteten Objektbereichen zurückgeworfen wird, gemessen wird und ein Messbild des Objekts (30) aufgenommen wird,
- mit einer Steuer- und Auswerteeinrichtung eine Form- oder Positionsinformation des Objekts (30) auf Grundlage des Messbilds bestimmt wird,
**dadurch gekennzeichnet,**
**dass** in einem Datenlesebetrieb:
- der Lichtempfänger (40) Licht (17) von einem mit einem Code (31) versehenen Objekt (30) misst und ein Codebild (45) aufnimmt und
- die Steuer- und Auswerteeinrichtung das Codebild (45) hinsichtlich kodierter Parameterdaten auswerten,
**dass** in einem auf den Datenlesebetrieb folgenden Messbetrieb die im Datenlesebetrieb gelesenen Parameterdaten verwendet werden.

13. Verfahren nach Anspruch 12
**dadurch gekennzeichnet,**
**dass** in einem Datenlesebetrieb eine längere Belichtungszeit des Lichtempfängers (40) eingestellt wird als im Messbetrieb.

## Claims

1. Measuring device for triangulation measurement, having
- a light transmitter (10) for emitting illuminating light (15) in a measurement mode,
- a transmitting optical system (20, 25) for directing the illuminating light (15) in a light pattern, in particular in a plurality of light strips, in the direction of an object (30),
- a light receiver (40) for recording an image (45), wherein, in the measurement mode, the image is a measurement image (45) of the object (30), which is recorded by measuring light (17) thrown back from the illuminated object areas,
- a control and evaluation unit, which is designed, in a measurement mode, to determine form and position information of the object (30) based on the measurement image (45),
**characterised in that**
the control and evaluation unit is designed to change over between the measurement mode and a data reading mode, wherein the control and evaluation unit is designed to evaluate the image (45), in the data reading mode, with respect to encoded parameter data and to use the parameter data read in this way in a subsequent measurement mode.

2. Measuring device according to claim 1,
**characterised in**
**that** there is an additional illumination means (11) and
**that** the control and evaluation unit is designed to switch on the additional illumination means (11) in the data reading mode.

3. Measuring device according to claim 2,
**characterised in that**
the additional illumination means (11) is designed so that it illuminates a larger area than the light transmitter (10).

4. Measuring device according to claim 2 or 3,
**characterised in that**
the control and evaluation unit is designed to switch off the additional illumination means (11) in the measurement mode.

5. Measuring device according to one of claims 1 to 4,
**characterised in**
**that** the parameter data include an exposure duration value and
**that** the control and evaluation unit is designed to use the exposure duration value, in the measurement mode following the data reading mode, to control the light transmitter (10) and / or the light receiver (40).

6. Measuring device according to one of claims 1 to 5,
**characterised in**
**that** the parameter data include object target information and
**that** the control and evaluation unit is designed to process by calculation form and position information of the object (30), determined based on the measurement image (45), with the object target information and to output a result hereof via an electrical connection of the measuring device.

7. Measuring device according to one of claims 1 to 6,
**characterised in that**
the control and evaluation unit is designed to carry out the data reading mode when the measuring device is switched on, and then to change over to the measurement mode.

8. Measuring device according to one of claims 1 to 7,
**characterised in that**
the control and evaluation unit is designed
- to evaluate the image (45) recorded by the light receiver (40) in order to establish whether a code (31) and thus encoded parameter data are contained in the image (45),
- to carry out the data reading mode if a code (31) is contained therein, and
- to carry out the measurement mode if no code (31) is contained therein.

9. Combination of a measuring device according to one of claims 1 to 8 and an object (30) containing the encoded parameter data.

10. Combination of the measuring device and the object according to claim 9,
**characterised in that**
the object (30) has a code area, in which parameter data are encoded through light and dark areas, in particular through a one-dimensional barcode or a two-dimensional code (31).

11. Combination of the measuring device and the object according to claim 9,
**characterised in that**
the object (30) has a vertical profile and parameter data are encoded through a progression of the vertical profile.

12. Method for triangulation measurement,
wherein, in a measurement mode:
- with a light transmitter (10), illuminating light (15) is emitted,
- with a transmitting optical system (20, 25), the illuminating light (15) is directed in a light pattern in particular in a plurality of light strips, in the direction of an object (30),
- with a light receiver (40), light (17) thrown back from illuminated object areas is measured and a measurement image of the object (30) is recorded,
- with a control and evaluation unit, form and position information of the object (30) is determined based on the measurement image,
**characterised in**
**that** in a data reading mode:
- the light receiver (40) measures light (17) from an object (30) provided with a code (31) and records a code image (45) and
- the control and evaluation unit evaluates the code image (45) with respect to encoded parameter data,
**that** in a measurement mode following the data reading mode, the parameter data read in the data reading mode are used.

13. Method according to claim 12,
**characterised in that**
in a data reading mode, a longer exposure time of the light receiver (40) is set than in the measurement mode.

## Revendications

1. Dispositif de mesure pour la mesure de triangulation avec
- un émetteur de lumière (10) pour l'émission de lumière d'éclairage (15) dans un mode de mesure,
- une optique d'émission (20, 25) pour l'acheminement de la lumière d'éclairage (15) dans un motif lumineux, en particulier dans plusieurs bandes de lumière, en direction d'un objet (30),
- un récepteur de lumière (40) pour la réception d'une image (45), dans lequel dans le mode de mesure l'image est une image de mesure (45) de l'objet (40), qui est reçue par la mesure de la lumière (17) qui est réfléchie par des zones d'objet éclairées,
- un dispositif de commande et d'évaluation qui est aménagé afin de déterminer dans un mode de mesure une information de forme ou de position de l'objet (30) sur la base de l'image de mesure (45),
**caractérisé**
**en ce que** le dispositif de commande et d'évaluation est aménagé afin de changer entre le mode de mesure et un mode de lecture de données, dans lequel le dispositif de commande et d'évaluation est aménagé afin d'évaluer, dans le mode de lecture de données, l'image (45) en ce qui concerne des données de paramètres codées et d'utiliser les données de paramètre lues de cette manière dans un mode de mesure consécutif.

2. Dispositif de mesure selon la revendication 1,
**caractérisé**
**en ce qu'**un dispositif d'éclairage supplémentaire (11) est présent et
**en ce que** le dispositif de commande et d'évaluation est aménagé afin de mettre sous tension le dispositif d'éclairage supplémentaire (11) dans le mode de lecture de données.

3. Dispositif de mesure selon la revendication 2,
**caractérisé**
**en ce que** le dispositif d'éclairage supplémentaire (11) est conçu de sorte qu'il éclaire une zone plus grande que l'émetteur de lumière (10).

4. Dispositif de mesure selon la revendication 2 ou 3,
**caractérisé**
**en ce que** le dispositif de commande et d'évaluation est aménagé afin de mettre hors tension le dispositif d'éclairage supplémentaire (11) dans le mode de mesure.

5. Dispositif de mesure selon l'une quelconque des revendications 1 à 4,
**caractérisé**
**en ce que** les données de paramètre comprennent une valeur de durée d'éclairage et
**en ce que** le dispositif de commande et d'évaluation est aménagé afin d'utiliser dans le mode de mesure suivant le mode de lecture de données la valeur de durée d'éclairage pour commander l'émetteur de lumière (10) et/ou du récepteur de lumière (40).

6. Dispositif de mesure selon l'une quelconque des revendications 1 à 5,
**caractérisé**
**en ce que** les données de paramètre comprennent des informations de consigne d'objet et
que le dispositif de commande et d'évaluation est aménagé afin de calculer une information de forme ou de position de l'objet (30) déterminée sur la base de l'image de mesure (45) avec les informations de consigne d'objet et d'émettre un résultat de celle-ci par le biais d'un raccord électrique du dispositif de mesure.

7. Dispositif de mesure selon l'une quelconque des revendications 1 à 6,
**caractérisé**
**en ce que** le dispositif de commande et d'évaluation est aménagé afin de réaliser le mode de lecture de données pour une mise sous tension du dispositif de mesure et de passer ensuite en mode de mesure.

8. Dispositif de mesure selon l'une quelconque des revendications 1 à 7,
**caractérisé**
**en ce que** le dispositif de commande et d'évaluation est aménagé afin :
- d'évaluer ensuite l'image (45) reçue par le récepteur de lumière (40) si un code (31) et des données de paramètres ainsi codées sont contenus dans l'image (45),
- de réaliser le mode de lecture de données si un code (31) est contenu, et
- de réaliser le mode de mesure si aucun code (31) n'est contenu.

9. Combinaison d'un dispositif de mesure selon l'une quelconque des revendications 1 à 8 et d'un objet (30) qui contient les données de paramètres codées.

10. Combinaison du dispositif de mesure et de l'objet selon la revendication 9,
**caractérisée**
**en ce que** l'objet (30) présente une zone de code dans laquelle des données de paramètre sont codées par des zones claires et sombres, en particulier par un code à barres à une dimension ou un code à deux dimensions (31).

11. Combinaison du dispositif de mesure et de l'objet selon la revendication 9,
**caractérisée**
**en ce que** l'objet (30) présente un profil vertical et des données de paramètre sont codées par un développement du profil vertical.

12. Procédé de mesure de triangulation,
pour lequel dans un mode de mesure
- avec un émetteur de lumière (10), de la lumière d'éclairage (15) est émise,
- avec une optique d'émission (20, 25), la lumière d'éclairage (15) est acheminée dans un motif de lumière, en particulier dans plusieurs bandes de lumière, en direction d'un objet (30),
- avec un récepteur de lumière (40), de la lumière (17) qui est réfléchie par des zones d'objet éclairées, est mesurée et une image de mesure de l'objet (30) est reçue,
- avec un dispositif de commande et d'évaluation, une information de forme ou de position de l'objet (30) est déterminée sur la base de l'image de mesure,
**caractérisé**
**en ce que** dans un mode de lecture de données :
- le récepteur de lumière (40) mesure de la lumière (17) d'un objet (30) pourvu d'un code (31) et reçoit une image de code (45) et
- le dispositif de commande et d'évaluation évalue l'image de code (15) en ce qui concerne des données de paramètre codées,
**en ce que** dans un mode de mesure suivant le mode de lecture de données, les données de paramètre lues dans le mode de lecture de données sont utilisées.

13. Procédé selon la revendication 12,
**caractérisé**
**en ce que** dans un mode de lecture de données, un temps d'éclairage plus long du récepteur de lumière (40) que dans le mode de mesure est réglé.
